# EUROPEAN PATENT APPLICATION

(11) **EP 2 052 627 A1**
(43) Date of publication of application: **29.04.2009**
(21) Application number: 07791076.8
(22) Date of filing: 20.07.2007
(51) Int. Cl.: A23C 19/082

(54) **PROCESS CHEESE AND METHOD OF PRODUCING THE SAME**

(30) Priority: 21.07.2006 JP 2006199500
(71) Applicant: Snow Brand Milk Products Co., Ltd., Sapporo-shi Hokkaido 065-0043 (JP)
(72) Inventor: UEDA, Naoyasu, Kawagoe-shi Saitama 350-1165 (JP); SHIBAUCHI, Yoshito, Kawagoe-shi Saitama 350-1165 (JP); KONDO, Hiroshi, Kawagoe-shi Saitama 350-1165 (JP)
(74) Representative: Polypatent
(86) International application number: PCT/JP2007/064339
(87) International publication number: WO 2008/010572

(57) **Abstract**

Provide process cheese having an appropriate level of viscosity required in the manufacturing process when cheese is heated and melted, while also maintaining good physical properties, flavor, texture, meltability in mouth and storage stability of cheese product after cooling, through blending of starting cheese material that has been heated to a high temperature of 110°C or above by 1 to 50 percent by weight relative to process cheese starting materials.

## Description

### Technical Field

The present invention relates to process cheese offering good physical properties, flavor, texture, smooth melting in the mouth, and storage stability, as well as a method of manufacturing the same.
The present invention also relates to process cheese offering improved physical properties, flavor, texture and smooth melting in the mouth through blending of starting cheese material that has been heated to a high temperature of 110°C or above with process cheese starting materials, as well as a method of manufacturing the same.

### Prior Art

Traditionally, process cheese is produced by adding water and melting salt to natural cheese and then heating and melting the mixture. However, this conventional method presents a problem in terms of the tendency of obtained product to harden when the water content is low or fat content is low.
On the other hand, process cheese of portion type is produced by adding an intermediate product of process cheese that has been emulsified and cooled (hereinafter referred to as "pre-cooked cheese") and maintaining a level of viscosity required for filling. However, this method also presents a problem because cheese to which pre-cooked cheese has been added tends to harden during storage, more than cheese not containing pre-cooked cheese, thereby resulting in poor flavor, texture, melting property in the mouth, etc.
Many technologies have been proposed to improve this melting property of process cheese in the mouth. However, a majority of these methods are based on combining melting salt, emulsifier, stabilizer and other secondary materials normally added to process cheese.

For example, Japanese Patent Laid-open No. 2004-290100 discloses improving the physical properties of process cheese by combining melting salt and emulsifier, while Japanese Patent Laid-open No. 2004-313177 discloses a way to do the same by specifying the blending ratio of sodium pyrophosphate and sodium polyphosphate.
On the other hand, methods to improve the physical properties of cheese by means of heat treatment are also known. For example, Japanese Patent Laid-open No. 2000-333601 discloses low-fat cheese having a soft and smooth texture and whose fat content is 20 percent by weight or less, produced via emulsification at a high temperature of 110°C or above.
Also, International Patent Laid-open No. WO2001/80657 discloses a finding that treating pre-cooked cheese at 120°C or above can suppress viscosity increase when the pre-cooked cheese is added.
However, attempts to produce process cheese offering good physical properties using the aforementioned conventional technologies result in lower viscosity during emulsification or stronger stringiness of cheese, leading to poor manufacturability in the filling process, or even quality problems such as poor flavor when melting salt or emulsifier is added. Accordingly, it has been very difficult to develop a technology that can satisfy both the requirements for manufacturability and product quality to obtain process cheese offering good physical properties.

Patent Literature 1: Japanese Paten Laid-open No. 2004-290100
Patent Literature 2: Japanese Paten Laid-open No. 2004-313177
Patent Literature 3: Japanese Paten Laid-open No. 2000-333601
Patent Literature 4: International Paten Laid-open No. WO2001/80657

### Summary of the Invention

### Problems to Be Solved by the Invention

In light of the aforementioned condition, it is the object of the present invention to improve the manufacturability and product quality of process cheese, which have been the problems of conventional technologies, at the same time. After diligently studying the changes in the properties of cheese that has been treated at high temperature, the inventors found a method to obtain cheese having an appropriate level of viscosity required in the manufacturing process when cheese is heated and melted, while also maintaining flavor and offering smoothness and good melting property in the mouth after cooling.

### Means for Solving the Problems

After conducting many tests based on the findings on manufacturing conditions and blends obtained through Japanese Patent Laid-open No. 2000-333601, with the purpose of achieving the aforementioned object, the inventors found that the texture, melting property and other physical properties of cheese after cooling, as well as storage stability, could be improved, without affecting the viscosity and flavor of cheese in melted state after heating, by means of adding starting cheese material that has been heated to a high temperature of 110°C or above, instead of making adjustments using melting salt and other secondary materials required under conventional methods. The inventors completed the present invention based on the above finding.
To be specific, the present invention relates to process cheese which is smooth and offers good meltability in mouth, characterized by blending a starting cheese material that has been heated at a high temperature of 110°C or above, by 1 to 50 percent by weight relative to the process cheese starting materials.
The present invention also relates to a method of manufacturing process cheese which is smooth and offers good meltability in mouth, characterized by blending a starting cheese material that has been heated at a high temperature of 110°C or above by 1 to 50 percent by weight relative to the process cheese starting materials and then emulsifying the blend.

### Effects of the Invention

Process cheese provided under the present invention has the viscosity required in the manufacturing process when material is heated and melted, while also offering excellent texture, flavor and melting property in the mouth, and excellent storage stability, after cooling. In the manufacture of process cheese under the present invention, the required level of viscosity in the filling process can be achieved, and at the same time the texture, flavor and melting property in the mouth can be improved and superior storage stability can be added compared to existing process cheese, by heat-treating a part of cheese material at 110°C or above, without changing melting salt, emulsifier and other secondary materials.

### Best Mode for Carrying out the Invention

Under the present invention, "cheese" encompasses natural cheese, process cheese and all other types of cheese meeting the standard definition in the Ministerial Ordinance concerning the Ingredient Standards for Milk and Dairy Products and normally used in the related technical fields.
Also under the present invention, "starting cheese material" that has been heated to a high temperature of 110°C or above refers to natural cheese or a mixture of natural cheese and pre-cooked cheese at any blending ratio-in other words, mixture containing water, melting salt and other secondary materials as necessary regardless of the fat content, water content, etc. Here, "pre-cooked cheese" refers to an intermediate product of process cheese that has been heated/emulsified and then cooled, which is generally used to adjust the viscosity of melted cheese in the manufacture of process cheese. Pre-cooked cheese is a type of process cheese when its blending formula is considered. When pre-cooked cheese is added to a material blend, however, a unique action called "creaming" occurs to provide the viscosity increasing effect, change the free energy at cheese surface, and so on. Some of these characteristics have been used to adjust viscosity in the manufacture of process cheese under conventional methods. However, some of this action can continue while product is being stored, resulting in deterioration of flavor, physical properties, melting property in the mouth and other features of cheese product.
Under the present invention, "heating to a high temperature of 110°C or above" means treating a starting cheese material at a uniform high temperature, and includes necessary mixing and dispersion processes. To prevent the "oil-off" effect during heating, water, melting salt and other secondary materials are sometimes added as explained above. In this case, emulsifying reaction is also implemented in addition to simple heating treatment.

Under the present invention, heating to a high temperature of 110°C or above can be performed using conventional emulsifying machines and heat exchangers. Because the required temperature is different depending on the type of starting cheese material to be heated to high temperature, as well as the number of months for aging, it is desirable to use a machine capable of heating up to 150°C and adjusting the holding temperature. In this case, heating for a long time at high temperature tends to cause burning smell, browning, etc., and thus controlling the holding temperature in units of seconds is indispensable. When transferring starting cheese material to the high-temperature heating machine, it is also effective to pre-heat starting cheese material to approx. 80°C to emulsify it using a normal heat exchanger, and then heat the pre-heated material using a heating machine capable of high-precision, high-temperature quick heating, in order to reduce the total heat. These high-temperature quick heating machines include a well-designed double-tube heating machine, high-speed agitation steam injection heating machine capable of continuous treatment, and joule heating machine, among others. Process cheese that has been heated to a high temperature of 110°C or above boils at atmospheric pressure and then cools to 100°C or below. However, the water content in process cheese fluctuates due to water evaporation, and therefore it is desirable to implement heat treatment after pre-adjusting the water content by the amount of water that will evaporate, or cool to 100°C or below using a general cooler attached to the heat exchanger.

With starting cheese material that has been heated to a high temperature of 110°C or above, the reaction of melting salt accelerates compared to normal emulsification. When adding melting salt to starting cheese material to prevent the aforementioned "oil-off" effect, therefore, it is desirable to reduce the adding amount of melting salt by approx. 10 to 30%. Also, smell tends to generate when material is added at a high temperature of 140°C or above, and thus the heating temperature should desirably be adjusted to a range of approx. 110°C to 130°C. Needless to say, heating to a range of 130°C to 150°C is possible as long as high-temperature quick heating treatment is available by controlling the holding temperature accurately as mentioned above. In this case, obtained starting cheese material that has been heated to high temperature is virtually sterile and provides new functions. If pre-cooked cheese is used by itself as cheese material to be heated to high temperature, on the other hand, the aforementioned acceleration of the reaction of melting salt during the high-temperature heating treatment increases the sourness and bitterness resulting from excessive reaction of residual melting salt in pre-cooked cheese. For better flavor, therefore, it is effective to add natural cheese, even by a small amount, before heating in order to lower the action of residual melting salt in pre-cooked cheese. An appropriate amount of natural cheese to be added to reduce residual melting salt in pre-cooked cheese depends on the type of cheese constituting the pre-cooked cheese used, as well as the blending ratios of secondary materials. Based on normal blends of pre-cooked cheese, deterioration in flavor due to increased saltiness, bitterness, etc., can be reduced by adding approx. 1 to 10 percent by weight of natural cheese.

As for the cooling conditions of starting cheese material that has been heated to a high temperature of 110°C or above, there are no specific limitations regarding the cooling time or cooling temperature. In other words, it is possible to cool starting cheese material to 10°C or below as necessary, either by gradual cooling or quick cooling, and use the cooled cheese after storing it for a specified period. There are no specific limitations regarding the temperature at which to add starting cheese material that has been heated to a high temperature of 110°C or above, to process cheese starting materials, and starting cheese material can be added at a raised or lowered temperature.
As for the content in process cheese starting materials of starting cheese material that has been heated to a high temperature of 110°C or above, melting property in the mouth and storage stability can be improved when the content of starting cheese material is at least 1 percent by weight relative to process cheese starting materials with hard-type process cheese. With normal process cheese, desired effects can be achieved until the content reaches 50 percent by weight. If starting cheese material is added by more than 50 percent by weight, smell generated by starting cheese material after it has been heated to a high temperature of 110°C can cause the flavor to drop. If the content exceeds 30 percent by weight relative to process cheese starting materials, the viscosity of cheese at heating/melting drops dramatically and this may prevent achievement of required viscosity at the time of filling. In this case, it is possible to adjust viscosity by adding pre-cooked cheese and other secondary materials. However, this reduces the desired effects due to the aforementioned action of pre-cooked cheese. For these reasons, it is desirable to add starting cheese material that has been heated to a high temperature of 110°C or above by 1 to 30 percent by weight relative to the process cheese starting materials, although adding starting cheese material by anywhere between 1 and 50 percent by weight is acceptable.
Examples and reference examples are given below to explain the present invention in further details. It should be noted, however, that these examples are provided for illustration purposes only and the present invention is not at all limited by these examples.

### [Reference Example 1]

### (Preparation of Starting cheese material Heated to High Temperature of 110°C or Above)

Each starting cheese material shown in Table 1 was heated to 110°C and 140°C using a double-tube heating machine, after which the heated starting cheese material was held at each temperature for 1 minute and then cooled in vacuum to approx. 80°C and subsequently packed in film. Next, the packed cheese was cooled to 5°C to prepare starting cheese material samples that had been heated to a high temperature of 110°C or above according to the present invention. As for the pre-cooked cheese in the table, starting cheese material of the same blend as cheese 1 that was heated to a high temperature of 140°C was used, where starting cheese material was heated to 85°C and emulsified at 120 rpm using a 5-kg kettle-type emulsifying machine. Thereafter, obtained cheese was wrapped in film and quickly cooled to 10°C, and then cooled in a 5°C refrigerator for 3 months before testing.

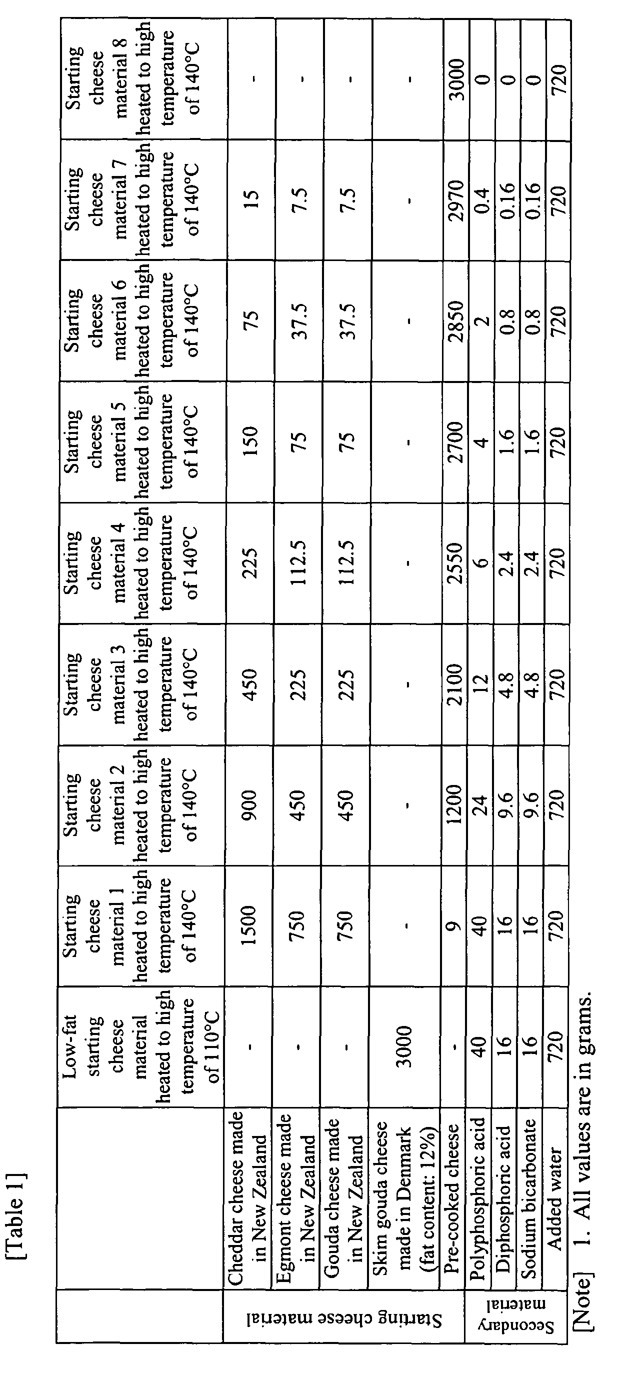

### [Example 1]

### (Preparation of Samples under Present Invention and Comparative Samples)

According to each blend shown in Table 2, material was heated to 85°C and emulsified at 120 rpm using a 5-kg kettle-type emulsifying machine, followed by continuous agitation at 40 rpm for 5 minutes, wrapping in film, and quick cooling to 10°C, in order to obtain process cheese (samples 1 to 6 under the present invention and comparative samples 1 and 2).
The samples under the present invention were roughly the same with the comparative samples in terms of blending ratios of secondary materials, but the type of starting cheese material heated to a high temperature of 110°C or above and whether or not such starting cheese material was added were different. However, samples 5 and 6 under the present invention were spiked with pre-cooked cheese to adjust viscosity. To evaluate if manufacturing of process cheese at these blending ratios was appropriate, comparative sample 2 and samples 2, 4 and 6 under the present invention were selected to measure the change in viscosity between immediately after emulsification and during the creaming process where emulsified material was agitated at a constant speed. Obtained process cheese was stored at 10°C, and water content, hardness, texture and flavor were evaluated 3 days and 3 months after sample production to assess the physical properties of process cheese.

**[Table 2]**

| | Comparative sample 1 | Comparative sample 2 | Sample 1 under present invention | Sample 2 under present invention | Sample 3 under present invention | Sample 4 under present invention | Sample 5 under present invention | Sample 6 under present invention |
|---|---|---|---|---|---|---|---|---|
| Cheddar cheese made in New Zealand | 1350 | 1500 | 1350 | 1485 | 1425 | 1350 | 1050 | 750 |
| Egmont cheese made in New Zealand | 675 | 750 | 675 | 742.5 | 712.5 | 675 | 525 | 375 |
| Gouda cheese made in New Zealand | 675 | 750 | 675 | 742.5 | 712.5 | 675 | 525 | 375 |
| Skim gouda cheese made in Denmark (fat content: 12%) | 300 | - | - | - | - | - | - | - |
| Low-fat starting cheese material heated to high temperature of 110°C | - | - | 300 | - | - | - | - | - |
| Starting cheese material 1 heated to high temperature of 140°C | - | - | - | 30 | 150 | 300 | 900 | 1500 |
| Pre-cooked cheese | 9 | 9 | 9 | 9 | 9 | 9 | 15 | 28 |
| Polyphosphoric acid | 50 | 50 | 45 | 49.5 | 47.5 | 45 | 35 | 25 |
| Diphosphoric acid | 20 | 20 | 18 | 19.8 | 19 | 18 | 14 | 10 |
| Sodium bicarbonate | 20 | 20 | 18 | 19.8 | 19 | 18 | 14 | 10 |
| Added water | 720 | 720 | 648 | 712.8 | 684 | 648 | 504 | 360 |

### [Example 2]

Each starting cheese material shown in Tables 3 and 4 was used to produce samples 7 to 20 under the present invention according to the same method explained in Example 1. The samples were evaluated by sensory flavor test 3 days after their production.

**[Table 3]**

| | Sample 7 under present invention | Sample 8 under present invention | Sample 9 under present invention | Sample 10 under present invention | Sample 11 under present invention | Sample 12 under present invention | Sample 13 under present invention | Sample 14 under present invention |
|---|---|---|---|---|---|---|---|---|
| Cheddar cheese made in New Zealand | 1425 | 1050 | 1425 | 1050 | 1425 | 1050 | 1425 | 1050 |
| Egmont cheese made in New Zealand | 712.5 | 525 | 712.5 | 525 | 712.5 | 525 | 712.5 | 525 |
| Gouda cheese made in New Zealand | 712.5 | 525 | 712.5 | 525 | 712.5 | 525 | 712.5 | 525 |
| Starting cheese material 2 heated to high temperature of 140°C | 150 | 900 | - | - | - | - | - | - |
| Starting cheese material 3 heated to high temperature of 140°C | - | - | 150 | 900 | - | - | - | - |
| Starting cheese material 4 heated to high temperature of 140°C | - | - | - | - | 150 | 900 | - | - |
| Starting cheese material 5 heated to high temperature of 140°C | - | - | - | - | - | - | 150 | 900 |
| Pre-cooked cheese | 9 | 15 | 9 | 15 | 9 | 15 | 9 | 15 |
| Polyphosphoric acid | 47.5 | 35 | 47.5 | 35 | 47.5 | 35 | 47.5 | 35 |
| Diphosphoric acid | 19 | 14 | 19 | 14 | 19 | 14 | 19 | 14 |
| Sodium bicarbonate | 19 | 14 | 19 | 14 | 19 | 14 | 19 | 14 |
| Added water | 684 | 504 | 684 | 504 | 684 | 504 | 684 | 504 |

**[Table 4]**

| | Sample 15 under present invention | Sample 16 under present invention | Sample 17 under present invention | Sample 18 under present invention | Sample 19 under present invention | Sample 20 under present invention |
|---|---|---|---|---|---|---|
| Cheddar cheese made in New Zealand | 1425 | 1050 | 1425 | 1050 | 1425 | 1050 |
| Egmont cheese made in New Zealand | 712.5 | 525 | 712.5 | 525 | 712.5 | 525 |
| Gouda cheese made in New Zealand | 712.5 | 525 | 712.5 | 525 | 712.5 | 525 |
| Starting cheese material 6 heated to high temperature of 140°C | 150 | 900 | - | - | - | - |
| Starting cheese material 7 heated to high temperature of 140°C | - | - | 150 | 900 | - | - |
| Starting cheese material 8 heated to high temperature of 140°C | - | - | - | - | 150 | 900 |
| Pre-cooked cheese | 9 | 15 | 9 | 15 | 9 | 15 |
| Polyphosphoric acid | 47.5 | 35 | 47.5 | 35 | 47.5 | 35 |
| Diphosphoric acid | 19 | 14 | 19 | 14 | 19 | 14 |
| Sodium bicarbonate | 19 | 14 | 19 | 14 | 19 | 14 |
| Added water | 684 | 504 | 684 | 504 | 684 | 504 |

### (Viscosity Measurement)

Viscosity was measured using a viscotester (VT-04 by RION) in the creaming process after emulsification. Viscosity was measured in pores (P).

### (Hardness Measurement)

Cubes of 1 cm per side were cut out from cheese that had been cooled to 10°C and passed through a texture analyzer fitted with a disc-shaped plunger of 75 mm in diameter (TA-XT2i by Stable Micro Systems) to measure the stress applied to the plunger after achieving a 80% compression at a compression speed of 0.5 mm/sec. The maximum stress was used as the hardness [g].

### (Measurement of Water Content)

0.5 g of cheese was taken and a microwave drying moisture meter (Anritsu) was used to measure the water content based on a drying time of 180 seconds.

### (Sensory Evaluation)

The sensory evaluation was conducted on a 5-point scale based on the evaluation criteria shown in Table 5.
Scores were calculated based on an average of scores given by five expert panelists.

**[Table 5]**

| Sensory evaluation score | Texture | Flavor |
|---|---|---|
| 5 | Smooth and good melting property in the mouth | Pleasant flavor without saltiness, sourness, bitterness or smell caused by heating |
| 4 | Better-than-average smoothness and good melting property in the mouth | Slight saltiness, sourness, bitterness or smell caused by heating |
| 3 | Average smoothness and good melting property in the mouth | Some saltiness, sourness, bitterness or smell caused by heating |
| 2 | Slightly hard and poor melting property in the mouth | Saltiness, sourness, bitterness or smell caused by heating, with recognizable drop in flavor |
| 1 | Hard and poor melting property in the mouth | Strong saltiness, sourness, bitterness or smell caused by heating, with recognizable drop in flavor |

Table 6 shows the viscosity measurement results in Example 1, while Table 7 shows the physical properties and sensory evaluation results taken 3 days and 3 months after sample production.

**[Table 6]**

| | Creaming time [min] | | | | |
|---|---|---|---|---|---|
| Sample | Immediately after emulsification | 4 | 5 | 10 | 14 |
| Comparative sample 2 | 30 | 250 | 300 | 450 | 700 |
| Sample 2 under present invention | 50 | 230 | 280 | 430 | 600 |
| Sample 4 under present invention | 50 | 200 | 270 | 430 | 700 |
| Sample 6 under present invention | 60 | 180 | 250 | 400 | 800 |

**[Table 7]**

| | After 3 days of storage | | | | After 3 months of storage | | |
|---|---|---|---|---|---|---|---|
| | Water content [%] | Hardness [g] | Texture [-] | Flavor [-] | Hardness [g] | Texture [-] | Flavor [-] |
| Comparative sample 1 | 48.4 | 2415 | 3.8 | 3 | 2655 | 3 | 2.6 |
| Comparative sample 2 | 46.8 | 2171 | 3.5 | 4.4 | 2550 | 3 | 2.8 |
| Sample 1 under present invention | 48.8 | 2371 | 4 | 3.8 | 2490 | 3.8 | 3.4 |
| Sample 2 under present invention | 46.7 | 2200 | 4 | 5 | 2380 | 3.6 | 4 |
| Sample 3 under present invention | 46.5 | 2214 | 4.2 | 5 | 2363 | 4 | 4 |
| Sample 4 under present invention | 46.4 | 2050 | 4.6 | 5 | 2080 | 4.2 | 4.2 |
| Sample 5 under present invention | 46.6 | 2115 | 4.4 | 5 | 2215 | 3.8 | 4 |
| Sample 6 under present invention | 46.8 | 2340 | 4 | 4.6 | 2450 | 3.5 | 3.4 |

Table 8 shows the flavor evaluation results in Example 2.

**[Table 8]**

| | Sensory flavor evaluation | | Sensory flavor evaluation |
|---|---|---|---|
| Sample 7 under present invention | 5 | Sample 14 under present invention | 5 |
| Sample 8 under present invention | 5 | Sample 15 under present invention | 5 |
| Sample 9 under present invention | 5 | Sample 16 under present invention | 5 |
| Sample 10 under present invention | 5 | Sample 17 under present invention | 5 |
| Sample 11 under present invention | 5 | Sample 18 under present invention | 4.6 |
| Sample 12 under present invention | 5 | Sample 19 under present invention | 4.2 |
| Sample 13 under present invention | 5 | Sample 20 under present invention | 4 |

### (Overall Evaluation)

From the results shown in Table 6, it was confirmed that the post-emulsification viscosities of samples under the present invention were roughly equivalent to those of comparative samples throughout the creaming process, and met the viscosity level required in the filing process.
Also based on Table 7, each process cheese obtained in Example 1 conforming to the present invention maintained roughly the same level of hardness and much better texture than the comparative samples 3 days after their production. Even 3 months after their production, the samples under the present invention also suppressed hardening of cheese during the storage and their texture was better than the comparative samples, indicating superior storage stability. Samples 2 to 5 under the present invention did not produce smell after heating, unlike sample 6 under the present invention, and presented good flavor. Table 8 also shows that, among the process cheese samples obtained in Example 2, samples 7 to 18 under the present invention had no sourness, saltiness or bitterness and had good flavor compared to samples 19 and 20 under the present invention.

## Claims

1. A process cheese which is smooth and offers good meltability in mouth, **characterized by** blending a starting cheese material that has been heated at a high temperature of 110°C or above by 1 to 50 percent by weight relative to process cheese starting materials.

2. A method of producing process cheese which is smooth and offers good meltability in mouth, **characterized by** blending a starting cheese material that has been heated at a high temperature of 110°C or above by 1 to 50 percent by weight relative to process cheese starting materials and then emulsifying the blend.
